(19) **Europäisches Patentamt**
**European Patent Office**
**Office européen des brevets**

(11) **EP 4 077 530 B1**

(12) **FASCICULE DE BREVET EUROPEEN**

(45) Date de publication et mention de la délivrance du brevet:
**03.01.2024   Bulletin 2024/01**

(21) Numéro de dépôt: **20820214.3**

(22) Date de dépôt: **10.12.2020**

(51) Classification Internationale des Brevets (IPC):
**C08L 9/04** *(2006.01)*      **C08L 9/08** *(2006.01)*

(52) Classification Coopérative des Brevets (CPC):
(C-Sets disponibles)
**C08L 9/04; C08L 9/08**                              (Cont.)

(86) Numéro de dépôt international:
**PCT/EP2020/085548**

(87) Numéro de publication internationale:
**WO 2021/122315 (24.06.2021 Gazette 2021/25)**

(54) **CIMENT D'IMPREGNATION AQUEUX**

WÄSSRIGER IMPRÄGNIERZEMENT

AQUEOUS IMPREGNATION CEMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **20.12.2019   FR 1915182**

(43) Date de publication de la demande:
**26.10.2022   Bulletin 2022/43**

(73) Titulaire: **Valeo Matériaux de Friction**
**87020 Limoges (FR)**

(72) Inventeurs:
• **ALIX, Isabelle**
  **95892 CERGY PONTOISE CEDEX (FR)**
• **FOUYER, Kevin**
  **95892 CERGY PONTOISE CEDEX (FR)**

(74) Mandataire: **Valeo Powertrain Systems**
**Service Propriété Intellectuelle**
**Immeuble le Delta**
**14, avenue des Béguines**
**95892 Cergy Pontoise (FR)**

(56) Documents cités:
**WO-A1-2019/063316      WO-A1-2019/063317**
**FR-A1- 2 927 965**

(52) Classification Coopérative des Brevets (CPC):
(Cont.)

C-Sets
**C08L 9/04, C08L 19/003;**
**C08L 9/08, C08L 19/003**

**Description**

La présente invention concerne un ciment d'imprégnation aqueux, notamment pour la fabrication d'un matériau de friction, ainsi que sur le matériau de friction à base dudit ciment. Elle porte également sur un disque de friction comprenant un matériau de friction selon l'invention.

En particulier, le domaine de la présente invention est celui des disques de friction de véhicule automobile. L'invention trouve une application particulièrement avantageuse dans un environnement sec. Le disque de friction peut ainsi notamment être mis en oeuvre dans les transmissions à sec telles qu'un double embrayage à sec ou embrayage pour transmission manuelle mais aussi dans les limiteurs de couple.

Il est connu de l'art antérieur d'utiliser lors de la fabrication de matériau de friction du caoutchouc pour l'obtention de propriétés élastiques et/ou amortissantes. Le document US2009011962 divulgue par exemple l'utilisation de caoutchouc en poudre afin de limiter la dilatation thermique du matériau de friction.

Lors de la fabrication d'un matériau de friction, il est usuel d'utiliser des solvants chlorés, en particulier pour dissoudre le caoutchouc. Le problème qui se pose lors de l'utilisation de tels solvants chlorés est leur aspect nocif qui nécessite, par conséquent, la mise en place d'opérations de confinement et de récupération afin d'éviter tout contact avec les opérateurs et tout rejet dans l'atmosphère. Afin de surmonter ce problème, il est connu de remplacer ces solvants chlorés par de l'eau. Ceci nécessite d'utiliser du latex plutôt que des caoutchoucs secs. En pratique un ciment aqueux est réalisé, qui résulte du mélange dans de l'eau de résines phénoliques, de charges, notamment sous forme de poudres, et de latex. Ce ciment est ensuite utilisé pour imprégner un fil constitué de fibres minérales et autres qui sert à former une ébauche cuite sous pression pour former le matériau de friction.

De manière connue, les caoutchoucs sont des polymères de type élastomères. Le frottement des élastomères diffère de nombreuses façons du frottement des autres solides. Ceci s'explique notamment par leur très faible module élastique et leur frottement interne élevé sur une large gamme de fréquence. Les élastomères n'obéissent que très rarement aux lois classiques de frottement, établies par Coulomb. La grande souplesse des élastomères leur confère la propriété d'épouser la quasi-totalité des rugosités des surfaces solides antagonistes. L'aire réelle de contact, dont dépend le coefficient de frottement est alors très proche de la surface apparente.

Pour les solides classiques, il existe 3 lois gouvernant le frottement :

- La force de frottement est proportionnelle à la charge normale, c'est-à-dire que plus la pression ou charge appliquée est élevée plus le frottement sera élevé.

- La force de frottement est indépendante de la surface apparente de contact : en réalité la surface d'un matériau, même poli, n'est pas lisse et présente des aspérités. C'est par les aspérités les plus hautes que nait le contact entre deux surfaces ; la surface réelle de contact est inférieure à la surface apparente de contact. La force de frottement est donc fortement reliée à l'état de surface des matériaux.

- La force de frottement est indépendante de la vitesse de glissement.

Pour les caoutchoucs, ces trois lois ne se vérifient pas. La nature des élastomères a une réelle importance dans le frottement car les effets des forces d'attraction moléculaire modifient considérablement le comportement du coefficient de frottement. Autrement dit, pour une même force et pour une même surface réelle, deux élastomères de nature différente peuvent avoir des forces de frottement différentes en fonction des contre-matériau choisis.

De manière générale, grâce à leur souplesse, les caoutchoucs ont la propriété d'épouser la quasi-totalité des rugosités des surfaces solides antagonistes. Ainsi, la surface réelle de contact est très proche de la surface apparente, ce qui invalide la deuxième loi.

Enfin, la force nécessaire pour amorcer et maintenir le glissement est très dépendante de la vitesse de glissement puisque la résistance à l'avancement est directement reliée aux pertes viscoélastiques de l'élastomère.

Dans ces conditions, la force de frottement peut s'exprimer ainsi :

$$F = F_{\text{adhésion}} + F_{\text{déformation}}.$$

$F_{\text{adhésion}}$ correspond à la force nécessaire pour rompre des micro-liaisons interfaciales qui peuvent s'établir entre les sommets des aspérités en contact. Elle dépend de la surface réelle de contact, de la résistance au cisaillement de l'interface et de la nature chimique de l'élastomère. $F_{\text{déformation}}$ est l'effort nécessaire pour déformer élastiquement le matériau (retard à la restitution élastique de l'élastomère après déformation). Elle dépend de la longueur caractéristique des aspérités de la surface antagoniste (distance entre aspérités).

Ces deux forces sont ainsi fortement reliées aux propriétés viscoélastiques du caoutchouc. Autrement dit, le frottement des élastomères est très dépendant de la vitesse et de la température de sollicitation.

Les performances d'un élastomère comme le caoutchouc sont liées à sa nature, son réseau réticulé, l'absence ou la présence de charges. Ces trois facteurs ont un effet sur sa viscoélasticité et donc son comportement au contact de surfaces.

Dans l'art antérieur, par exemple dans la demande FR2927965, le caoutchouc peut être introduit dans les mélanges sous forme de latex de type nitrile-butadiène (NBR) et/ou styrène-butadiène (SBR) non vulcanisé ou non polymérisé. La transformation se poursuit lors de l'étape de cuisson des matériaux de friction, cette transformation s'effectue avec un mélange de résines thermodurcissables comme les résines phénolique novolaque et/ou mélamine formaldéhyde. La réticulation peut être mixte, c'est-à-dire que des ponts chimiques se font entre les chaines de polymères. Ainsi le réseau réticulé ne correspond pas à deux des composants séparés mais à une combinaison de ces composants. Les propriétés obtenues ne sont donc pas celles du caoutchouc seul et ses propriétés élastiques sont différentes. Les matériaux de friction ainsi obtenus, sont des bons compromis en confort et résistants mécaniquement dans une plage de température allant jusqu'à 350°C.

Cependant, leur niveau général de frottement est insuffisant pour répondre aux besoins actuels, et dans certaines conditions de conduites sévères, le frottement chute et présente un risque de fonctionnement.

En effet, les transmissions en environnement à sec nécessitent aujourd'hui d'avoir un niveau de confort amélioré, mais également une meilleure capacité en couple pour permettre la réduction des tailles et des dimensionnements des embrayages automobiles, c'est-à-dire un niveau de frottement augmenté par le matériau de friction. De même les limiteurs de couple requièrent des matériaux avec des niveaux de frottement améliorés.

Il existe donc un besoin pour un ciment d'imprégnation aqueux permettant de réaliser un matériau de friction à frottement amélioré.

L'invention vise à proposer un ciment d'imprégnation permettant de résoudre les problèmes précités.

A cet effet, l'invention a pour objet un ciment d'imprégnation aqueux, notamment pour la fabrication de matériau de friction comprenant :

- une poudre de caoutchouc réticulé et

- un latex de caoutchouc de type nitrile-butadiène ou styrène-butadiène, non réticulé.

Le ciment selon l'invention permet ainsi d'associer un caoutchouc réticulé qui ne réagira pas avec une résine et conservera ses propriétés viscoélastiques avec un caoutchouc non réticulé introduit sous forme de latex qui réagira avec une résine et verra ses propriétés viscoélastiques modifiées.

Une telle association entraine ainsi une amélioration de la capacité à transmettre le couple moteur à l'arbre de boite de transmission c'est-à-dire un accroissement du frottement.

L'invention ainsi que ses avantages seront aisément compris à la lumière de la description et des exemples de réalisation qui suivent.

[Fig. 1] représente l'évolution du coefficient de frottement en fonction de la température pour un matériau selon un exemple comparatif A et selon l'invention A'.

[Fig. 2] représente l'évolution du coefficient de frottement en fonction de la température pour un matériau selon un exemple comparatif B et selon l'invention B'.

[Fig. 3] représente l'évolution du coefficient de frottement en fonction de la température pour un matériau selon un exemple comparatif C et selon l'invention C'.

[Fig. 4] compare le coefficient de frottement à deux températures et deux niveaux d'énergie dissipée dans le matériau entre deux matériaux de friction selon la présente invention (A' et C')

[Fig. 5] compare le coefficient de frottement à deux températures et deux niveaux d'énergie dissipée entre deux matériaux de friction selon la présente invention (B' et C')

[Fig. 6] compare le confort de deux matériaux de friction comparatifs (A et C)

[Fig. 7] compare le confort pour un matériau selon un exemple comparatif A et de la présente invention A'

Dans la présente invention, sauf indication contraire, tous les (%) indiqués sont des pourcentages (%) en poids.

Dans la présente invention, par l'expression matériau de friction « à base de », on entend un matériau de friction comportant le ciment d'imprégnation et/ou le produit de réaction des différents constituants de base utilisés, certains de ces constituants pouvant réagir entre eux, au moins partiellement, lors des différentes phases de fabrication du matériau, typiquement lors de la cuisson modifiant le ciment d'imprégnation tel qu'il est préparé au départ. Ainsi, le ciment d'imprégnation tel que mis en oeuvre peut être différent à l'état non réticulé et à l'état réticulé.

D'autre part, tout intervalle de valeurs désigné par l'expression « entre a et b » signifie le domaine de valeurs allant de a jusqu'à b (c'est-à-dire incluant les bornes strictes a et b).

Le ciment d'imprégnation aqueux selon l'invention comprend une poudre de caoutchouc réticulé et un latex de caoutchouc de type nitrile-butadiène ou styrène-butadiène, non réticulé.

Avantageusement, le ciment comprend en outre une charge lubrifiante à base de graphite par exemple du graphite synthétique ou naturel.

Avantageusement, la charge lubrifiante comprend en plus du graphite des sulfures de métaux choisis parmi le groupe constitué de sulfure de fer, sulfure de cuivre, sulfure de zinc, bisulfure de molybdène, sulfure d'étain, bisulfure d'étain et leurs mélanges.

Typiquement le graphite représente entre 30 et 100% en poids de la charge lubrifiante.

Avantageusement, la poudre de caoutchouc réticulé est de type nitrile-butadiène (NBR).

Avantageusement, le latex de caoutchouc est de type nitrile-butadiène (NBR).

Avantageusement, le ciment d'imprégnation aqueux comprend une résine thermodurcissable telle qu'une résine phénolique novolaque et/ou mélamine formaldéhyde. De préférence, on utilisera une résine à haut poids moléculaire, c'est-à-dire de 2000 à 6000 g/mol.

Avantageusement, le ciment d'imprégnation aqueux présente un ratio massique de la poudre de caoutchouc sur le latex de caoutchouc compris entre 0,2 et 0,7. Le ratio est calculé à partir du poids du latex de caoutchouc sec. En d'autres termes, le rapport se fait entre les extraits secs, sans l'eau du latex.

L'invention a également pour objet un matériau de friction à base de ciment d'imprégnation selon l'invention et d'au moins un fil comprenant des fibres choisies parmi les fibres organiques, minérales, métalliques et leurs mélanges. Ces fibres sont des fils continus et permettent d'assurer la résistance à la force centrifuge et d'apporter les propriétés thermiques du matériau.

Ainsi, dans le matériau de friction, le fil est imprégné par le ciment aqueux c'est-à-dire que le ciment d'imprégnation pénètre dans l'espace entre les différentes fibres d'un fil, autour des fibres, autour d'un toron de fibres et/ou au coeur desdites fibres.

Typiquement les fibres organiques sont choisies parmi le groupe constitué des fibres de polyacrylonitrile (PAN), de carbone, de cellulose, d'aramide et de leurs mélanges. Les fibres minérales sont des fibres de verre et/ou basalte. Enfin les fibres métalliques sont des fibres métalliques conductrice telles que les fibres de cuivre.

Avantageusement, le pourcentage en poids de la poudre de caoutchouc réticulé est compris entre 3 et 10%, de préférence 5%, par rapport au poids total du matériau de friction.

Avantageusement, le pourcentage en poids du latex de caoutchouc non réticulé est compris entre 10 et 20%, de préférence 12 et 15%, par rapport au poids total du matériau de friction.

Avantageusement, le matériau de friction est fabriqué à base de (les % sont donnés en poids par rapport au produit total sec et fini) :

- 35 à 45% de fibres minérales et/ou organiques

- 0 à 15% de fibres métalliques et

- 39 à 55% de ciment d'imprégnation aqueux.

De préférence, le matériau de friction comprend 45 à 53% de fibres (minérales, organiques et métalliques) en poids par rapport au poids par rapport au produit total sec et fini.

Avantageusement, le ciment d'imprégnation aqueux comprend (les % sont donnés en poids par rapport au produit total sec et fini, c'est-à-dire au matériau de friction):

- 20 à 30% de résine thermodurcissable,

- 3 à 10% de poudre de caoutchouc réticulé,

- 10% à 20% de latex de caoutchouc de type nitrile-butadiène ou styrène-butadiène, non réticulé

- 1 à 4% de catalyseur de vulcanisation

- 0 à 10% de charge lubrifiantes, et

- 5 à 17% d'autres charges.

Typiquement, le catalyseur de vulcanisation est le souffre ou l'oxyde de zinc. Les autres charges sont avantageusement choisies parmi les charges dites « de friction ». A titre d'exemple, de telles charges pourront être choisies parmi le noir de carbone, le sulfate de baryum, le charbon actif, le kaolin, les microsphères creuses (en verre en particulier) ou le carbonate de calcium.

Le matériau de friction peut être fabriqué selon les étapes suivantes :

1. formation d'un pré-mélange comportant de l'eau additionnelle et des tensio-actifs, au moins une résine thermodurcissable, le latex de caoutchouc de type nitrile-butadiène ou styrène-butadiène non réticulé, le catalyseur et les charges (lubrifiantes et/ou autres charges),

2. adjonction à ce pré-mélange de poudre de caoutchouc réticulé de manière à former le ciment d'imprégnation aqueux selon l'invention,

3. imprégnation d'au moins un fil, séchage pour évaporer l'eau du mélange et l'eau du latex puis

4. mise en forme du fil, par exemple sous forme annulaire puis transformation par moulage et thermocompression afin d'obtenir le matériau de friction.

Par eau additionnelle, on vise l'eau qui n'est pas contenue dans le latex ou d'autres matières premières introduites sous forme aqueuse lors du procédé.

L'étape de thermocompression est réalisée typiquement à une température comprise entre 140 et 200°C sous 0,5 à 40 MPa. Le matériau de friction peut subir des étapes d'usinage final.

Plusieurs exemples de formule de ciments d'imprégnation aqueux pour la fabrication de matériau de friction sont donnés ci-après. Dans ce qui suit, les compositions sont exprimées en pourcentage en poids rapportés au matériau de friction sec fini.

Exemple 1 : Exemple comparatif relatif à un ciment contenant du latex NBR avec (exemple selon l'invention A') ou non (exemple comparatif A) de la poudre de caoutchouc NBR réticulé.

Les matériaux de friction présentent les compositions données dans le tableau 1 suivant.

[Tableau 1]

| Composants | Ex comparatif A | Ex invention A' |
|---|---|---|
| Fibres organiques et/ou minérales | 40% | |
| Fibres métalliques | 0% | |
| Résine thermodurcissable | 22% | |
| Latex de NBR non réticulé | 13% | |
| Catalyseur de vulcanisation | 1% | |
| Charge lubrifiante | 5% | 2% |
| Poudre de NBR réticulé | 0% | 5% |
| Autres charges | 9% | 7% |

Exemple 2 : Exemple comparatif relatif à un ciment sans charge lubrifiante contenant du latex SBR avec (exemple selon l'invention B') ou non (exemple comparatif B) de la poudre de caoutchouc NBR réticulé.

Les matériaux de friction présentent les compositions données dans le tableau 2 suivant.

6

[Tableau 2]

| Composants | Ex comparatif B | Ex invention B' |
|---|---|---|
| Fibres organiques et/ou minérales | 38% | |
| Fibres métalliques | 10% | |
| Résine thermodurcissable | 22% | |
| Latex de SBR non réticulé | 13% | |
| Catalyseur de vulcanisation | 2% | |
| Poudre de NBR réticulé | 0% | 5% |
| Autres charges | 16% | 11% |

Exemple 3 : Exemple comparatif relatif à un ciment sans charge lubrifiante contenant du latex NBR avec (exemple selon l'invention C') ou non (exemple comparatif C) de la poudre de caoutchouc NBR réticulé.

Les matériaux de friction présentent les compositions données dans le tableau 3 suivant.

[Tableau 3]

| Composants | Ex comparatif C | Ex invention C' |
|---|---|---|
| Fibres organiques et/ou minérales | 42% | |
| Fibres métalliques | 7% | |
| Résine thermodurcissable | 22% | |
| Latex de NBR non réticulé | 12% | |
| Catalyseur de vulcanisation | 1% | |
| Poudre de NBR réticulé | 0% | 5% |
| Autres charges | 15% | 10% |

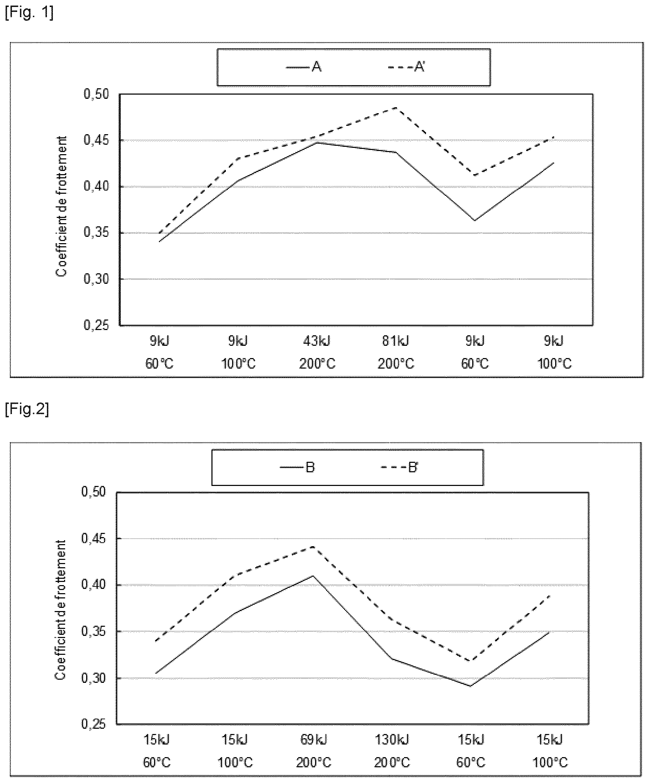

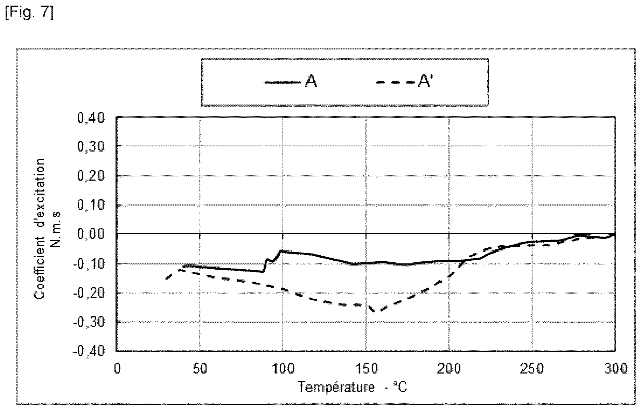

Les figures 1, 2 et 3 représentent l'évolution du coefficient de frottement en fonction de la température. Pour une surface de frottement précisée en cm$^2$ (167 cm$^2$ pour A, A', C et C' et 250 cm$^2$ pour B et B') on mesure la dissipation d'une énergie à la surface du matériau de friction, en température, et mesure du frottement moyen des matériaux de friction avec les contre matériaux de l'embrayage (fonte). Il s'agit d'une comparaison des frottements en fonction des situations plus ou moins énergétiques. Les basses énergies couvrent la conduite en milieu courant des véhicules, les plus hautes énergies représentent des conditions plus sévères (circulation avec bouchon, véhicule chargé, conduite en montagne...).
Comme on peut le voir sur les figures 1, 2 et 3, il y a une amélioration du frottement dans toutes les situations (particulièrement à forte énergie dissipée pour l'exemple 1) pour tous les matériaux de friction fabriqués à partir du ciment d'imprégnation aqueux selon la présente invention.

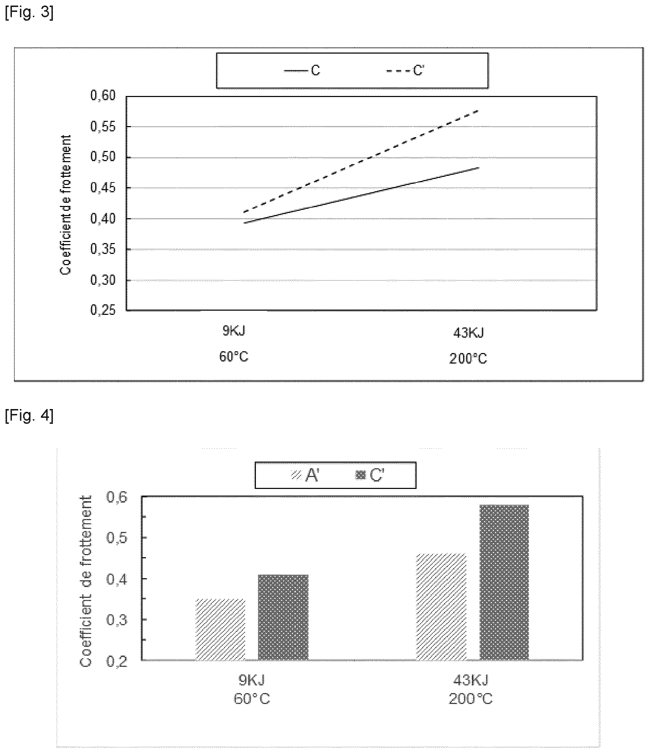

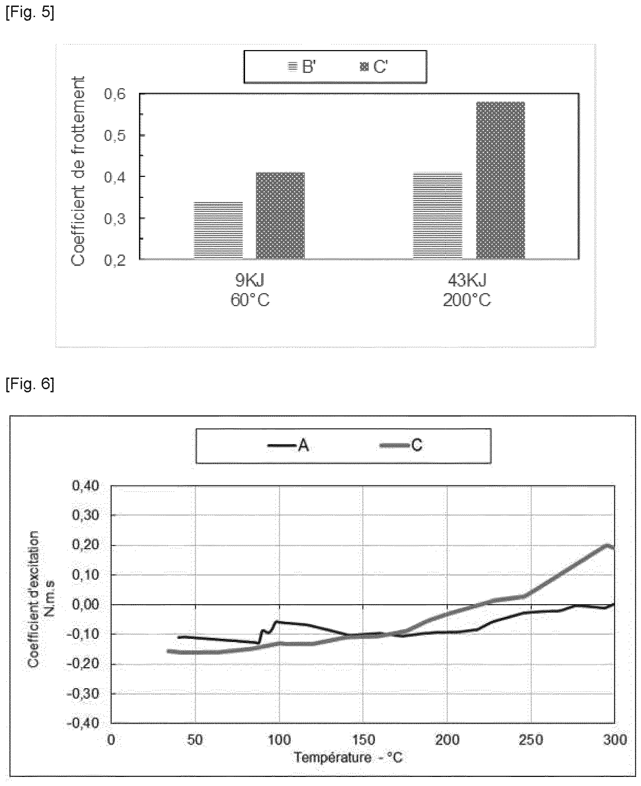

Les figures 4 et 5 comparent le coefficient de frottement à deux températures données entre deux matériaux de friction selon la présente invention. Ainsi, selon la figure 4 on peut s'apercevoir que la garniture comprenant une charge lubrifiante à base de graphite génère une baisse de frottement mais permet grâce à la poudre de caoutchouc de garder un niveau de frottement suffisant (>0.3) pour le fonctionnement dans l'embrayage. La figure 5 souligne quant à elle que les niveaux de frottements sont les plus élevés pour la combinaison latex NBR non réticulé et poudre NBR réticulée.
Enfin les figures 6 et 7 représentent le coefficient d'excitation de matériau de friction dans un embrayage pour boite manuelle ou double embrayage en milieu sec, en fonction de la température. Plus ce coefficient est négatif, moins le matériau ne génère de vibrations et améliore le confort lors du changement de rapport de vitesse de la boite.
La figure 6 qui compare le confort de deux matériaux de friction selon les exemples comparatifs A et C montre l'effet du lubrifiant contenant du graphite dès 200°C sur le coefficient d'excitation qui reste négatif et améliore le confort du matériau jusqu'à 300°C.
La figure 7 qui compare le confort du matériau selon l'exemple comparatif A et de la présente invention A' démontre que les performances en confort dans la plage de température 100 à 200°C sont améliorés pour le matériau A'. Le comportement à plus haute température est lié à la présence du lubrifiant contenant du graphite.

Ainsi le matériau A' associe un bon niveau de frottement à un bon niveau de confort.

**Revendications**

1. Ciment d'imprégnation aqueux notamment pour la fabrication de matériau de friction comprenant :

   - une poudre de caoutchouc réticulé et
   - un latex de caoutchouc de type nitrile-butadiène ou styrène-butadiène, non réticulé

2. Ciment d'imprégnation aqueux selon la revendication 1 **caractérisé en ce qu'**il comprend une charge lubrifiante à base de graphite.

3. Ciment d'imprégnation aqueux selon la revendication 1 ou 2, **caractérisé en ce que** ladite poudre de caoutchouc réticulé est de type nitrile-butadiène.

4. Ciment d'imprégnation aqueux selon l'une quelconque des revendications précédentes, **caractérisé en ce que** le latex de caoutchouc est de type nitrile-butadiène.

5. Ciment d'imprégnation aqueux selon l'une quelconque des revendications précédentes, **caractérisé en ce qu'**il comprend une résine thermodurcissable telle qu'une résine phénolique novolaque et/ou mélamine formaldéhyde.

6. Ciment d'imprégnation aqueux selon l'une quelconque des revendications précédentes, **caractérisé en ce qu'**il présente un ratio massique de la poudre de caoutchouc sur le latex de caoutchouc compris entre 0,2 et 0,7.

7. Matériau de friction à base de ciment d'imprégnation aqueux selon l'une quelconque des revendications précédentes et d'au moins un fil comprenant des fibres choisies parmi les fibres organiques, minérales, métalliques et leurs mélanges.

8. Matériau de friction selon la revendication précédente **caractérisé en ce que** le pourcentage en poids de la poudre de caoutchouc réticulé est compris entre 3 et 10%, de préférence 5%, par rapport au poids total du matériau de friction.

9. Matériau de friction selon la revendication précédente **caractérisé en ce que** le pourcentage en poids du latex de caoutchouc est compris entre 10 et 20%, de préférence 12 et 15%, par rapport au poids total du matériau de friction.

10. Disque de friction **caractérisé en ce qu'**il comprend un matériau de friction selon l'une quelconque des revendications 7 à 9 précédentes.

**Patentansprüche**

1. Wässriger Imprägnierzement, insbesondere zur Herstellung von Reibungsmaterial, umfassend:

   - ein Pulver aus vernetztem Kautschuk und
   - einen Latex von unvernetztem Kautschuk vom Nitril-Butadien- oder Styrol-Butadien-Typ.

2. Wässriger Imprägnierzement nach Anspruch 1, **dadurch gekennzeichnet, dass** er einen schmierenden Füllstoff auf Basis von Graphit umfasst.

3. Wässriger Imprägnierzement nach Anspruch 1 oder 2, **dadurch gekennzeichnet, dass** das Pulver aus vernetztem Kautschuk vom Nitril-Butadien-Typ ist.

4. Wässriger Imprägnierzement nach einem der vorhergehenden Ansprüche, **dadurch gekennzeichnet, dass** der Kautschuklatex vom Nitril-Butadien-Typ ist.

5. Wässriger Imprägnierzement nach einem der vorhergehenden Ansprüche, **dadurch gekennzeichnet, dass** er ein wärmehärtbares Harz wie ein Phenol-Novolak- und/oder Melamin-Formaldehyd-Harz umfasst.

6.  Wässriger Imprägnierzement nach einem der vorhergehenden Ansprüche, **dadurch gekennzeichnet, dass** er ein Massenverhältnis von Kautschukpulver zu Kautschuklatex zwischen 0,2 und 0,7 aufweist.

7.  Reibungsmaterial auf Basis von wässrigem Imprägnierzement nach einem der vorhergehenden Ansprüche und mindestens einem Garn, das aus organischen Fasern, anorganischen Fasern, Metallfasern und Mischungen davon ausgewählte Fasern umfasst.

8.  Reibungsmaterial nach dem vorhergehenden Anspruch, **dadurch gekennzeichnet, dass** der Gewichtsprozentanteil des Pulvers aus vernetztem Kautschuk zwischen 3 und 10 % liegt und vorzugsweise 5 % beträgt, bezogen auf das Gesamtgewicht des Reibungsmaterials.

9.  Reibungsmaterial nach dem vorhergehenden Anspruch, **dadurch gekennzeichnet, dass** der Gewichtsprozentanteil des Kautschuklatex zwischen 10 und 20 %, vorzugsweise 12 und 15 %, bezogen auf das Gesamtgewicht des Reibungsmaterials, liegt.

10. Reibscheibe, **dadurch gekennzeichnet, dass** sie ein Reibungsmaterial nach einem der vorhergehenden Ansprüche 7 bis 9 umfasst.

**Claims**

1.  Aqueous impregnation cement, in particular for the manufacture of friction material, comprising:

    - a crosslinked rubber powder and
    - a non-crosslinked rubber latex of nitrile-butadiene or styrene-butadiene type.

2.  Aqueous impregnation cement according to Claim 1, **characterized in that** it comprises a graphite-based lubricating filler.

3.  Aqueous impregnation cement according to Claim 1 or 2, **characterized in that** said crosslinked rubber powder is of nitrile-butadiene type.

4.  Aqueous impregnation cement according to any one of the preceding claims, **characterized in that** the rubber latex is of nitrile-butadiene type.

5.  Aqueous impregnation cement according to any one of the preceding claims, **characterized in that** it comprises a thermosetting resin, such as a phenolic novolac and/or melamine-formaldehyde resin.

6.  Aqueous impregnation cement according to any one of the preceding claims, **characterized in that** it exhibits a ratio by weight of the rubber powder to the rubber latex of between 0.2 and 0.7.

7.  Friction material based on aqueous impregnation cement according to any one of the preceding claims and on at least one yarn comprising fibres chosen from organic fibres, inorganic fibres, metal fibres and their mixtures.

8.  Friction material according to the preceding claim, **characterized in that** the percentage by weight of the crosslinked rubber powder is of between 3% and 10%, preferably 5%, with respect to the total weight of the friction material.

9.  Friction material according to the preceding claim, **characterized in that** the percentage by weight of the rubber latex is of between 10% and 20%, preferably 12% and 15%, with respect to the total weight of the friction material.

10. Friction disc, **characterized in that** it comprises a friction material according to any one of the preceding Claims 7 to 9.

[Fig. 1]

[Fig.2]

[Fig. 3]

[Fig. 4]

[Fig. 5]

[Fig. 6]

[Fig. 7]

**EP 4 077 530 B1**

## RÉFÉRENCES CITÉES DANS LA DESCRIPTION

**Documents brevets cités dans la description**

- US 2009011962 A

- FR 2927965